# EUROPEAN PATENT SPECIFICATION

(11) **EP 2 851 269 B1**
(45) Date of publication and mention of the grant of the patent: **02.11.2016**
(21) Application number: 14185920.7
(22) Date of filing: 23.09.2014
(51) Int. Cl.: B62D 7/08

(54) **Steering system assembly for commercial vehicles and commercial vehicle comprising the steering system assembly**
Lenksystem für Nutzfahrzeuge und Nutzfahrzeug mit dem Lenksystem
Ensemble de système de direction pour véhicules commerciaux et véhicule commercial comprenant l'ensemble de système de direction

(30) Priority: 24.09.2013 IT MI20131570
(43) Date of publication of application: 25.03.2015
(73) Proprietor: IVECO S.p.A., 10156 Torino (IT)
(72) Inventor: Black, Neil, St. Kilda East, Victoria 3183 (AU)
(74) Representative: Franzolin, Luigi

(56) References cited:
- JP-U- S5 780 364
- US-A- 4 540 059
- US-A- 6 055 853

## Description

### Field of the invention

The present invention relates to a steering system assembly for commercial vehicles and to a commercial vehicle comprising the steering system assembly.

### Description of the prior art

The known commercial vehicles having one front steering axle have the steering power disposed in a front position-according to a travelling direction of the vehicle - with respect to the steering axle. Usually the hydraulic power steering is positioned substantially at the end of one of the side members of the vehicle. Several leverages connected with the swinging arm of the hydraulic power steering command the axle tie rod, which command the turning of the wheel spindles.

In order to avoid the interference of the power steering with the wheels, the power steering is arranged as far as possible from the steering axle.

However, for vehicles not really long enough it is not possible to avoid such interference.

JP-S-5780364 and US4540059 disclose power steerings comprising a respective linear actuator that is either coaxial to or located backwards with respect to the axles.

A steering system assembly according to the preamble of claim 1 is disclosed in the patent application US6055853.

### Summary of the invention

Therefore it is the main object of the present invention to provide a steering system assembly for commercial vehicles, which overcomes the above problems/drawbacks.

The main principle of the invention is to arrange the power steering substantially over the steering axle of the vehicle so as the wheels can turn around it without they interfere with the steering wheels themselves.

The further leverages that, of course, are necessary to transmit the steering motion to the steering axle can be position indifferently in front or in rear position with respect to the power steering.

Advantageously, thanks to the present invention it is possible to reach the theoretical 50 degree of wheel cut.

Another object of the present invention is a ground vehicle provided with only one, preferably front, steering axle provided with the above steering system assembly.

These and further objects are achieved by means of a steering systems and a commercial vehicle comprising the steering system as described in the attached claims, which form an integral part of the present description.

### Brief description of the drawings

The invention will become fully clear from the following detailed description, given by way of a mere exemplifying and non limiting example, to be read with reference to the attached drawing figures, wherein:
- Fig. 1 shows a perspective view of the steering system assembly according to the present invention;
- Figs. 2 and 2a, show a frontal view of one component of the steering system of figure 1 and a respective right side view of such component;
- Fig. 3 shows an exploded perspective view of steering system of figure 1.

The same reference numerals and letters in the figures designate the same or functionally equivalent parts.

### Detailed description of the preferred embodiments

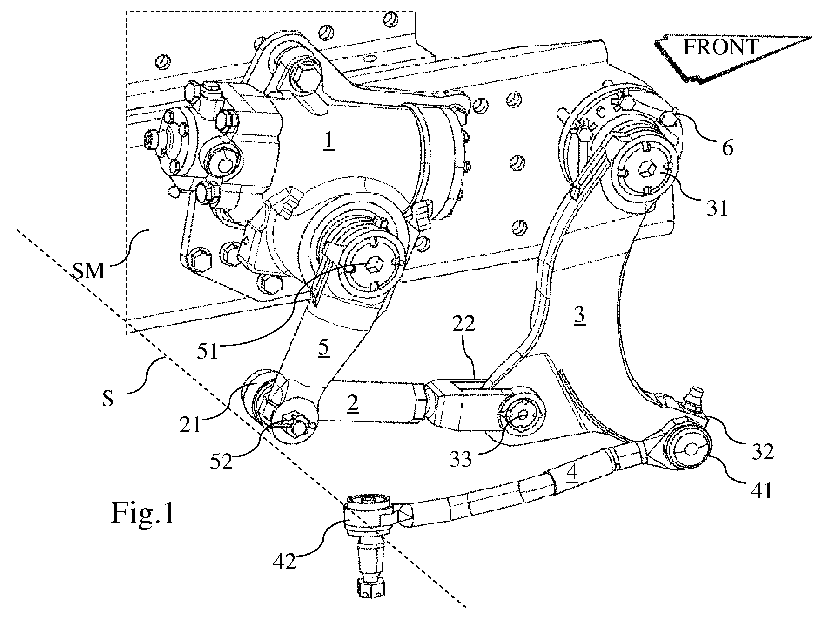

Figure 1 of the present invention shows a perspective view of the steering assembly of the present invention.

Even if the steering axle is not shown, a dashed axis S schematizes the steering axle and, in particular, its centre line, which is transversal with respect to the elongated direction indicated by the side member SM.

Over such axis S is arranged the power steering 1, that can be hydraulic or electric or of further nature.

The power steering 1 has a swinging arm 5 having two opposite ends 51 and 52. The first end 51 has its fulcrum on the power steering 1, where it pivots for defining its swinging motion; the second end is rotatably joined with a tie rod 2 for transferring the steering motion to a steering idler arm 3.

The steering idler arm 3 has three connection points: a first point 31, corresponding with its upper end, is rotatably associated with the same side member SM, which supports the power steering 1; a second point 32, corresponding with its lower end, is connected with the steering tie rod 4; a third point 33, indicating an intermediate portion of the idler arm 3, is connected with the tie rod 2 hinged on the swinging arm 5.

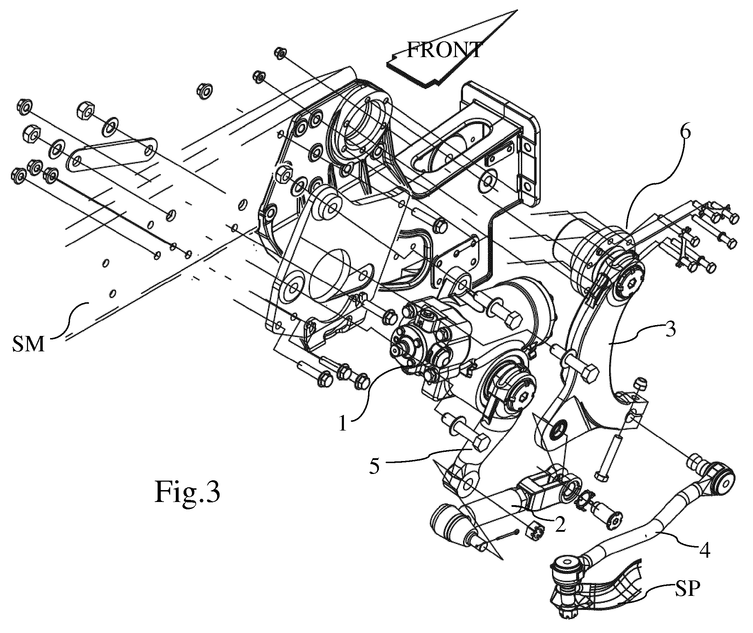

About the steering tie rod 4, its first end 41 is hinged on the steering idler arm 3, while the second and opposite end 42, with respect to the first end 41, is suitable to be connected to the spindle of the wheel (partially shown on figure 3). The spindle of the wheel, as usual, lies in a first vertical plane where lies also the axis S.

By the figure 1, it is clear that the second end 42 falls under the power steering 1, and in particular, according to a preferred embodiment, under (vertically under) the fulcrum 51 of the swinging arm 5.

In the context of the present description "over" or "under" shall be interpreted as "vertically over" according to a vertical direction, perpendicular with respect to the horizontal direction defined by the side member SM of figure 1.

In other words "over" means "over and substantially at", and "under" means "under and substantially at".

This aspect is clear also by the fact that the end 42 is suitable to be connected with the wheel spindle, that is operatively in a lower position with respect to the side member SM.

In the context of the present description, "front" shall be interpreted according to the front travelling of the vehicle. The front direction is indicated on figure 1 by means of a thick arrow on the right of the figure.

At least the leverages 2, 3, 5 are able to move by remaining lying on a second vertical longitudinal plane. This second vertical plane is parallel respect to the vehicle development and transversal with respect to said first plane. Such plane is perpendicular with the axis S.

The set of the components 1, 5, 2, 3, according to the present invention, occupies a really little space over the axle, therefore, the wheel is free to rotate around its spindle, without touching such set of components.

The steering idler arm can be placed in front or in the rear of the power steering 1 in a symmetric way with respect to the view on figure 1. In order to understand this further, symmetric arrangement - with respect to the one shown through the figures - it is sufficient to revert the thick arrow on the right of figure 1.

According to a preferred embodiment of the present invention, the swinging arm 5 is external with respect to the reciprocal disposition of the power steering on the side member SM. Therefore, the first end 31 of the idler arm 3 is hinged on the side member SM by means of spacing means 6.

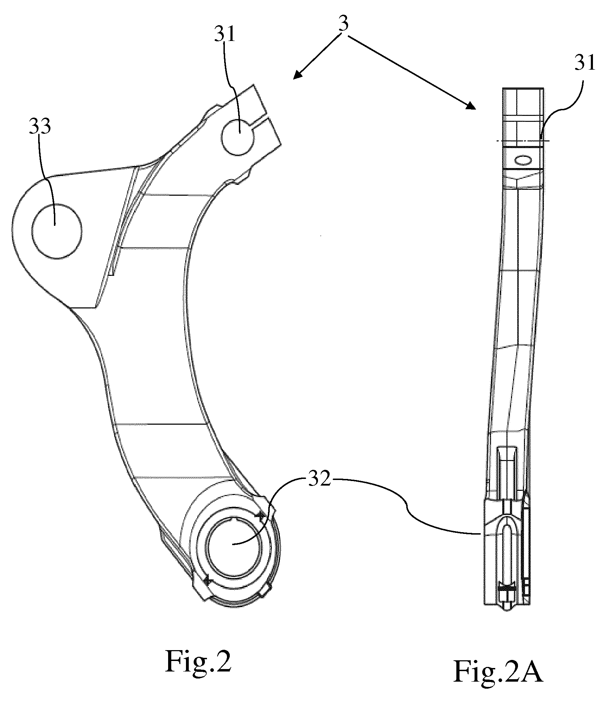

In order to avoid an excessive stress on the spacing means 6, the idler arm 3 is preferably not flat, but the opposite ends 31 and 32 lie on parallel but separate planes, between each other. Therefore, the second end 32 tends to protrude externally with respect to the side member SM. This is particularly clear from fig. 2a.

On figure 3 is shown an exploded view of the steering system. The arm SP of the spindle (not shown) of a wheel is shown connected with the end 42 of the steering tie rod 4.

From figure 3 it is possible also to appreciate that the swinging arm 5 is slightly bend along its development toward the side member SM.

Moreover, from figure 3 it is well shown an embodiment of the tie rod 2 having the end 22, suitably to be connected with the idler arm 3, shaped as a fork.

The tie rod 2 is really short in order to have the power steering 1 and the idler arm 3 close together.

The half-moon shape of the idler arm 3 helps in this sense, namely, in order to arrange the power steering 1 and the idler arm 3 close together, by leaving free space for the wheel rotation.

In addition, it is preferred that the idler arm 3 is curved as an "half moon" with its hump facing the swinging arm 5. According to a preferred implementation of the invention, a commercial vehicle is provided with a just one front steering axle having the steering system as described above.

Many changes, modifications, variations and other uses and applications of the subject invention will become apparent to those skilled in the art after considering the specification and the accompanying drawings which disclose preferred embodiments thereof.

Further implementation details will not be described, as the man skilled in the art is able to carry out the invention starting from the teaching of the above description.

## Claims

1. Steering system assembly for commercial vehicles, the steering system comprising:
- a steering axle (S),
- a power steering (1),
- leverages (2,3,4,5) to transmit the steering motion from the power steering (1) to a spindle arm (SP) of a steering wheel spindle of the steering axle,
the power steering (1) being arranged over the steering axle and substantially at the steering axles (S), said leverages (2,3,4,5) comprising a swinging arm (5) having a fulcrum (51) on the power steering (1) and suitable to lie in a vertical longitudinal plane of the vehicle;
**characterised in that**
the spindle arm (SP) is arranged vertically under said fulcrum (51).

2. Steering system according to claim 1, wherein said leverages (2, 3, 4, 5) comprise an idler arm (3) connected to said swinging arm (5) through a tie rod (2) and to a spindle arm (SP) of a steering wheel spindle through a steering tie rod (4).

3. Steering system according to claim 2, wherein said idler arm (3) has three connection points:
- a first point (31), corresponding with its upper end, rotatably associated with a vehicle fixed element (SM) supporting the power steering (1)
- a second point (32), corresponding with its lower end, is connected with the steering tie rod (4);
- a third point (33), indicating an intermediate portion of the idler arm (3), connected with the tie rod (2) hinged on the swinging arm (5).

4. Steering system according to claims 2 or 3, wherein said idler arm (3) is curved as a "half-moon" with its hump facing the swinging arm (5).

5. Steering system according to claims 2 to 4, wherein said second end (32) of the idler arm (3) tends to protrude externally with respect to said vehicular fixed element (SM).

6. Steering system according to any of the previous claims 2 - 5, wherein said leverages (2, 3, 4) are disposed in front or in rear position with respect to the power steering (1).

7. Commercial vehicle provided with a fixed element (SM), only one steering axle (S), a power steering (1), leverages (2, 3, 4, 5) to transmit the steering motion from the power steering (1) to a spindle arm (SP) of a steering wheel spindle of the steering axle, the power steering (1) being arranged over the steering axle and substantially at the steering axles (S), said leverages (2, 3, 4, 5) comprising a swinging arm (5) having a fulcrum (51) on the power steering (1) and lying on a vertical longitudinal plane of the vehicle;
**characterised in that**
the spindle arm (SP) is arranged vertically under said fulcrum.

## Patentansprüche

1. Lenksystemanordnung für Nutzfahrzeuge, umfassend:
- eine Lenkachse (S),
- eine Hilfskraftlenkung (1),
- Hebel (2,3,4,5) zur Übertragung der Steuerbewegung von der Hilfskraftlenkung (1) auf einen Spindelarm (SP) einer Lenkradspindel auf die Lenkachse,
wobei die Hilfskraftlenkung (1) oberhalb der Lenkachse und im wesentlichen an der Lenkachse (S) angeordnet ist,
und die Hebel (2,3,4,5) einen Schwenkarm (5) umfassen, mit einem Gelenkpunkt (51) auf der Hilfskraftlenkung (1) und geeignet, in einer senkrechten Längsebene des Fahrzeugs zu liegen,
**dadurch gekennzeichnet, dass** der Spindelarm (SP) vertikal unterhalb des Gelenkpunkts (51) angeordnet ist.

2. Lenksystem gemäß Anspruch 1, bei welchem die Hebel (2,3,4,5) einen Lenkzwischenhebel (3) umfassen, der mit dem Schwenkarm (5) durch eine Gelenkstange (2) und mit einem Spindelarm (SP) der Lenkradspindel durch eine Spurstange (4) verbunden ist.

3. Lenksystem gemäß Anspruch 2, bei welchem der Lenkzwischenhebel (3) drei Verbindungspunkte aufweist:
- einen ersten Punkt (31), entsprechend seinem oberen Ende, der drehbar mit einem feststehenden Fahrzeugelement (SM) verbunden ist, das die Hilfskraftlenkung (1) lagert,
- einen zweiten Punkt (32), entsprechend seinem unterem Ende, welcher mit der Spurstange (4) verbunden ist;
- einen dritten Punkt (33), der einen mittleren Bereich des Lenkzwischenhebels (3) bezeichnet, und welcher mit der Gelenkstange (2) verbunden ist, die an den Schwenkarm (5) angelenkt ist.

4. Lenksystem gemäß den Ansprüchen 2 oder 3, bei welchem der Lenkzwischenhebel (3) halbmondförmig gekrümmt ist, wobei seine konvexe Seite dem Schwenkarm (5) zugewandt ist.

5. Lenksystem gemäß einem der Ansprüche 2 bis 4, bei welchem das zweite Ende (32) des Lenkzwischenhebels (3) dazu neigt, nach außen bezüglich des feststehenden Fahrzeugelements (SM) vorzuspringen.

6. Lenksystem gemäß einem der vorhergehenden Ansprüche 2 bis 5, bei welchem die Hebel (2,3,4) in einer vorderen oder in einer hinteren Position bezüglich der Hilfskraftlenkung (1) angeordnet sind.

7. Nutzfahrzeug, mit einem feststehenden Element (SM), lediglich einer Lenkachse (S), einer Hilfskraftlenkung (1), Hebeln (2,3,4,5) zur Übertragung der Lenkbewegung von der Hilfskraftlenkung (1) auf einen Spindelarm (SP) einer Lenkradspindel der Lenkachse, welche Hilfskraftlenkung (1) über der Lenkachse und im wesentlichen an der Lenkachse (S) angeordnet ist,
wobei die Hebel (2,3,4,5) einen Schwenkarm (5) umfassen, mit einem Gelenkpunkt (51) auf der Hilfskraftlenkung (1), der auf einer senkrechten Längsebene des Fahrzeugs liegt;
**dadurch gekennzeichnet, dass** der Spindelarm (SP) vertikal unter dem Gelenkpunkt angeordnet ist.

## Revendications

1. Ensemble de système de direction pour véhicules utilitaires, le système de direction comprenant :
- un essieu de direction (S),
- une direction assistée (1),
- des bras de levier (2, 3, 4, 5) pour transmettre le mouvement de direction de la direction assistée (1) à un bras de direction (SP) d'une colonne de direction de l'essieu de direction,
la direction assistée (1) étant agencée sur l'essieu de direction et essentiellement au niveau des essieux de direction (S),
lesdits bras de levier (2, 3, 4, 5) comprenant un bras oscillant (5) ayant un pivot (51) sur la direction assistée (1) et étant approprié pour reposer suivant un plan longitudinal vertical du véhicule ;
**caractérisé en ce que**
le bras de direction (SP) est agencé de manière verticale sous ledit pivot (51).

2. Système de direction selon la revendication 1, dans lequel lesdits bras de levier (2, 3, 4, 5) comprennent un bras de renvoi (3) relié audit bras oscillant (5) par l'intermédiaire d'une biellette de direction (2) et à un bras de direction (SP) d'une colonne de direction par l'intermédiaire d'une biellette de direction (4).

3. Système de direction selon la revendication 2, dans lequel ledit bras de renvoi (3) possède trois points de connexion :
- un premier point (31), correspondant à son extrémité supérieure, associé de manière rotative à un élément fixe du véhicule (SM), supportant la direction assistée (1),
- un deuxième point (32), correspondant à son extrémité inférieure, est relié à la biellette de direction (4) ;
- un troisième point (33), indiquant une partie intermédiaire du bras de renvoi (3), relié à la biellette de direction (2) articulée sur le bras oscillant (5).

4. Système de direction selon la revendication 2 ou 3, dans lequel ledit bras de renvoi (3) est incurvé en forme de « demi-lune », sa bosse se présentant face au bras oscillant (5).

5. Système de direction selon les revendications 2 à 4, dans lequel ladite seconde extrémité (32) du bras de renvoi (3) a tendance à faire saillie vers l'extérieur par rapport au dit élément fixe du véhicule (SM).

6. Système de direction selon l'une quelconque des revendications précédentes 2 à 5, dans lequel lesdits bras de levier (2, 3, 4) sont disposés dans une position avant ou arrière par rapport à la direction assistée (1).

7. Véhicule utilitaire équipé d'un élément fixe (SM), seulement d'un essieu de direction (S), d'une direction assistée (1), de bras de levier (2, 3, 4, 5) pour transmettre le mouvement de direction de la direction assistée (1) à un bras de direction (SP) d'une colonne de direction de l'essieu de direction, la direction assistée (1) étant agencée sur l'essieu de direction et essentiellement au niveau des essieux de direction (S), lesdits bras de levier (2, 3, 4, 5) comprenant un bras oscillant (5) ayant un pivot (51) sur la direction assistée (1) et reposant sur un plan longitudinal vertical du véhicule ;
**caractérisé en ce que**
le bras de direction (SP) est agencé de manière verticale sous ledit pivot.
